# EUROPEAN PATENT SPECIFICATION

(11) **EP 0 435 805 B1**
(45) Date of publication and mention of the grant of the patent: **23.04.1997**
(21) Application number: 90480186.7
(22) Date of filing: 13.11.1990
(51) Int. Cl.: G06F 17/30

(54) **Method of forming a search criteria and saving a search result**
Methode, um ein Suchkriterium zu erstellen und ein Suchergebnis zu speichern
Méthode pour produire un critère de recherche et pour sauvegarder ce résultat

(30) Priority: 28.12.1989 US 458061
(43) Date of publication of application: 03.07.1991
(73) Proprietor: International Business Machines Corporation, Armonk, N.Y. 10504 (US)
(72) Inventor: Shu-Fan Wang, Diana, Trophy Club, TX 76262 (US); Kastelic, Francis Jean, Austin, TX 78750 (US)
(74) Representative: de Pena, Alain

(56) References cited:
- EP-A- 0 322 123
- IBM TECHNICAL DISCLOSURE BULLETIN, vol. 32, no. 5A, October 1989, New York, US, pp. 450-451; 'Searching for a document within a folder or set of specific folders'

## Description

This invention relates to expanding user access to a library of shared documents, and more particularly, to searching a shared library for previously stored documents and saving both the search criteria used in locating the documents as well as the documents.

Electronic office systems frequently provide for the sharing of information through the use of data repositories called electronic libraries. These electronic (shared) libraries are capable of being accessed by users of common networks as well as users of networks of interconnected pieces of equipment and programs. A user (end user) may be any person, device, program, or computer system that utilizes the systems for information processing and information exchange. Along with the increase in the number of users storing and retrieving information from such libraries are the accompanying problems of locating information once it has been stored in a shared library. The problem of later locating a particular document is further exacerbated with a proliferation in the number of electronic libraries available to a particular user. Instead of a single common repository, users may have a plurality of these libraries accessible on a common or interconnected network.

A SEARCH command is used to locate library information in these shared libraries based on selection conditions specified with the command. The SEARCH command provides a search criteria used for locating particular documents. Once the search criteria is used, it is discarded. A user wishing to search a plurality of shared libraries must reformulate the search criteria for each shared library to be searched. In a like manner, the results of a search are discarded after presentation to a user following execution of the SEARCH command. A user cannot specify that the results should be saved for later reuse. In particular, a user is unable to specify that the search results are to be stored in a document that forms a relationship with another document. For example, electronic libraries provide means whereby a document may exist within another document similar to a folder. A user is unable to specify that the search results obtained from applying a particular search criteria is to be stored within one of documents existig in a folder relationship.

In the IBM Technical Disclosure Bulletin Vol 32. N° 5A, October 1989 is disclosed page 450 and 451 a method for searching documents of a library in one folder or in a set of specific folders. The search result list stored, the name of the list being specified by one operand of the SEARCH COMMAND. A second operand of the SEARCH command is used to specify the search criteria for documents in a folder or in a set of folders. A third operand is used to specify that the entire folder is searched. This publication answers the need of creating a search result document and provides a depth of the search in one or many folders.

Consequently, what is needed is a technique for saving the search criteria used to locate documents stored in a shared libraries as well as the documents located as a result of applying the search criteria.

This invention relates to a method of saving a search criteria and the documents located as a result of applying the search criteria in a document interchange management system having a plurality of shared libraries. This invention provides a Search Criteria Document for storing a document interchange management system's encoded search criteria. The Search Criteria Document is reusable for additional searches within one of a plurality of shared libraries as specified by the user. The documents located as a result of applying the search criteria may be saved in a Search Result Document. This Search Result Document is reusable and can be used to save additional documents located or uncovered as a result of searches on other shared libraires. In addition, the useris provided with a means of storing the Search Result Document contents in a document having a relationship with another document such as a folder.

Figure 1 is a block diagram of a document interchange management system where this invention may be practiced.

Figure 2 is a basic document model created for each document filed in the library of the system shown in Figure 1.

Figure 3 is a document interchange SEARCH command with its available operands.

Figure 3A is a preferred response when the SEARCH command of Figure 3 is executed.

Figure 4 is a search selection criteria for the SEARCH command shown in Figure 3.

Figure 5 is the Backus Nauer Form for a filter used in selecting documents to be included as part of the results of a search.

Figure 6 specifies the predicates allowed for the SEARCH command shown in Figure 3.

Figure 7 is the structure for the Search Result Document sub-profile.

Figures 8 - 13 are the structures for the parameters for a Search Result Document sub-profile.

Figures 14 - 18 are the formats for encoding storage documents for the SEARCH command.

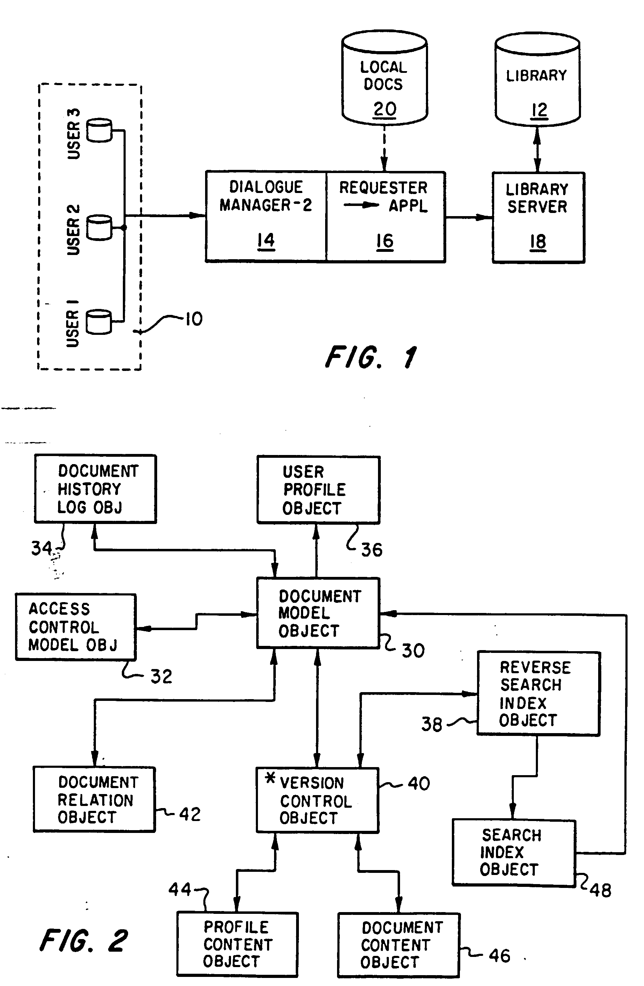

Figure 1 shows a document management system for exchanging documents stored in a shared library between the shared library and a plurality of end users. A plurality of end users 10 may store and retrieve documents in a shared library 12. A user (end user) may be any person, device, program, or computer system that utilizes the system for data processing or information exchange. One prior art structure for conveying any document, irrespective of its content, from one type of document management system to another is the Document Interchange Architecture (DIA).

DIA is a program-to-program communication architecture which defines the protocols and data structures, which when followed or used by programmers, enables programs to interchange information such as documents and messages in a consistent and predictable manner. DIA is independent of the type of information managed. DIA includes document objects which contain parameters or descriptors that describe the contents of the information being transmitted. The descriptors contained in the objects include the name under which the information is filed, the authors, the subject of the invention and the date the information was filed.

The library 12, when implemented using DIA structures, is capable of being accessed flexibility and simultaneously by a plurality of users and represents a common repository or shared resource. Unlike the shared library 12, a user's personal or private documents are stored in a local resource 20. This local storage resource 20 is usually not shared with other users and each user has dedicated space within the resource. Users may access this local storage 20 through the dialogue manager 14 and the requester application 16. The dialogue manager 14 and requester application 16 also interface with the library server 18 which controls a user's access to the shared library 12. When a user files a document in the library 12, the library server 18 constructs parameters or descriptors that describe the contents of the information being stored in the library.

Referring to Figure 2, a basic document model is shown for information stored in the library 12 as shown in Figure 1. This document model is created by the library server 18 and is stored with each document. While it is not necessary to implement the basic document model explicitly to support DIA library service architecture, there is the requirement that a design be mapped to these models, or to a subset of them. A brief description of each component of the basic document model will now be given.

The User Profile Object 36 (UPO) is not part of the DIA document model, but is instead an object referred to by the DIA document model. The User Profile Object 36 is created when the users represented are logged members of an Office System network. It identifies a user and contains information about the user such as aliases, services authorized to the user, default accounting information, and other user-specific information.

The Document Model Object 30 is the heart of the DIA document model and is logically the first object created when a document is filed for the first time in a document library. It contains information concerning ownership and attributes of a particular document. More specifically, it contains document instance attributes, such as whether the document is editable or not-editable; the maximum number of versions; and the action to be taken if the user has attempted to edit a document that cannot be edited.

The Access Control Model Object 32 (ACMO) is created when a document is filed for the first time into a DIA library. The principle purpose of the Access Control Model Object 32 is to consolidate information to be used in determining non-owner access to the document. It contains access control information such as whether the document is capable of being accessed by any one (public), whether access is permitted to a limited number of explicitly specified users (private), or whether the information is shared with others.

The Document History Log Object 34 (DHLO) is optionally created when a document is filed in the library and the user wishes to record various activities on the document. For example, a user may wish to record the number of times the document was read and by whom.

The Document Relation Object 42 (DRO) is created when a document is first filed in the library. Its purpose is to describe the logical relationships between a document and other related or grouped documents. For example, the DIA architecture allows folder documents to be created that contain other documents. When such a relationship exists, then each document contained within the folder has a pointer entry called a Library Assigned Document Name (LADN) in the Document Relation Object 42.

The Version Control Object 42 (VCO) is created when a document is first filed into the library and contains information for several objects that may comprise a single named version of a document. It provides space for version naming, version level locks, and other version related level process controls.

The Profile Content Object 44 (PCO) is created when a document is first filed into the library and a user wishes to create sub-objects for performance or other reasons. The Profile Content Object 44 is the repository for Profile information related to the sub-objects.

The Document Content Object 46 (DCO) is created when a document is first filed into the library and provides storage for the document contents. In addition, the Document Content Object 46 provides storage for saving information concerning the actual size of the document in various units of measurement.

The Search Index Object 48 (SIO) contains entries used in searching within a document. The entries are placed in the SIO 48 as a result of the following sequence of actions on other objects. The basic Document Model Object 30 is first created as part of processing a FILE command. The Library Server then scans the Profile Content Object 44, the Document Relation Object 42, and the Access Control Model Object 32 to find terms to be used to support a parametric SEARCH. As each term is identified, an entry is made in the Search Index Object 48 whose name includes the parametric search term value and semantics. If no SIO 48 exists when the Library Server scans the aforementioned objects, one is created and the entries placed therein as if the SEARCH Index Object 48 always existed.

The Reverse Search Index Object 38 (RSIO) exists to support the removal of Search Index Object 48 entries when a document is removed from the library by a DELETE command. Entries for parametric search terms are placed in the RSIO 38 at the same time they are being made in the Search Index Object 48.

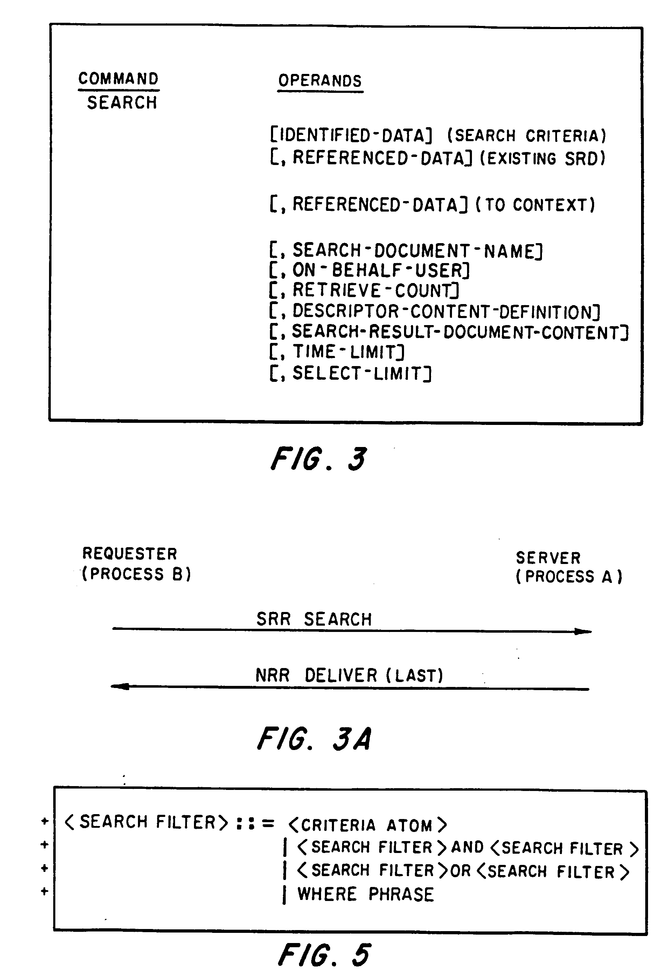

Turning to Figure 3, a SEARCH command is shown along with its available operands. This command is used to locate documents in the library 12 of Figure 1. Documents that satisfy a specified search criteria are returned to one of the users 10 making the search request. The search criteria may consist of combinations of DIA document profile parameters, document model object parameters, folders, and contextual search data. The search criteria may also be enterprise-specific search terms added to a document by an enterprise of related users, i.e., a bank. The input to the SEARCH command includes the libraries to be searched, the criteria used to qualify the document, the amount of time to spend searching, the maximum number of documents which may be selected, and what information to return for the documents selected. This invention is directed to saving the search criteria used to qualify the documents for a search as well as saving the documents returned as a result of applying the search criteria. Implied within the SEARCH command is support for DIA access rules. These rules as applied to the SEARCH command require that only those documents to which the requester (user) is authorized may be filtered with the search conditions specified.

The operands for the SEARCH command are shown in Figure 3 and will be briefly described. The IDENTIFIED-DATAOPERAND identifies the document which contains the selection criteria used to qualify a document for inclusion in the results of the search. The identified document must have a document type of Search Criteria Document (SCD) or Search Result Document (SRD) and conform to their internal formats. The absence of this optional operand results in a search for all documents which the requester/user has access.

The REFERENCED-DATA operand identifies an existing document which will be updated with the results of the current search. This document must have a document type of Search Result Document (SRD) or an exception will be raised. This operand may optionally be supplied to identify a context (folder or stapler) into which the Search Result Document should be added.

The SEARCH-DOCUMENT-NAME operand is optional and specifies both the profile GCID and the document name value of the Search Result Document to be created or updated by the SEARCH process. If this operand is missing, no Search Result Document (SRD) will be created.

The ON-BEHALF-USER operand is optional and identifies the user on whose behalf the SEARCH is to be done. The search is performed as if the ON-BEHALF-USER user was the command requester. If a Search Result Document is created, the ON-BEHALF-USER is the owner of the new document.

The RETRIEVE-COUNT operand, when present and indicating a value greater than zero, specifies the maximum number of document descriptors that will be returned. A RETRIEVE-COUNT of zero specifies that the requestor/user only wants the document type sub-profile for the Search Result Document. In such a case, the total number of documents or document descriptors are returned instead of the actual documents or document descriptors.

The DESCRIPTOR-CONTENT-DEFINITION operand specifies the content of the Document Descriptor Document (DDD) be delivered as part of the reply to the SEARCH command. If the operand is omitted, the LADN and optionally the library name will be stored.

The TIME-LIMIT operand is optional and if present specifies the maximum number of minutes (from 1 to 1440) that the command server should allow the search process to execute. If this operand is omitted, the search will run until each document within the specified scope is examined.

The SELECT-LIMIT operand is optional and if present specifies the maximum number of documents that the requestor/user wants the command server to allow during the search process. If this operand is missing, the maximum number of documents is determined by the command server.

With particular reference to Figure 3A, there is shown the preferred response when the SEARCH command is successfully executed. At the normal conclusion of a search, a reply will be delivered to the requester by a DELIVER command. If the SEARCH command terminates abnormally, a reply will sent via the ACKNOWLEDGE command along with an exception condition.

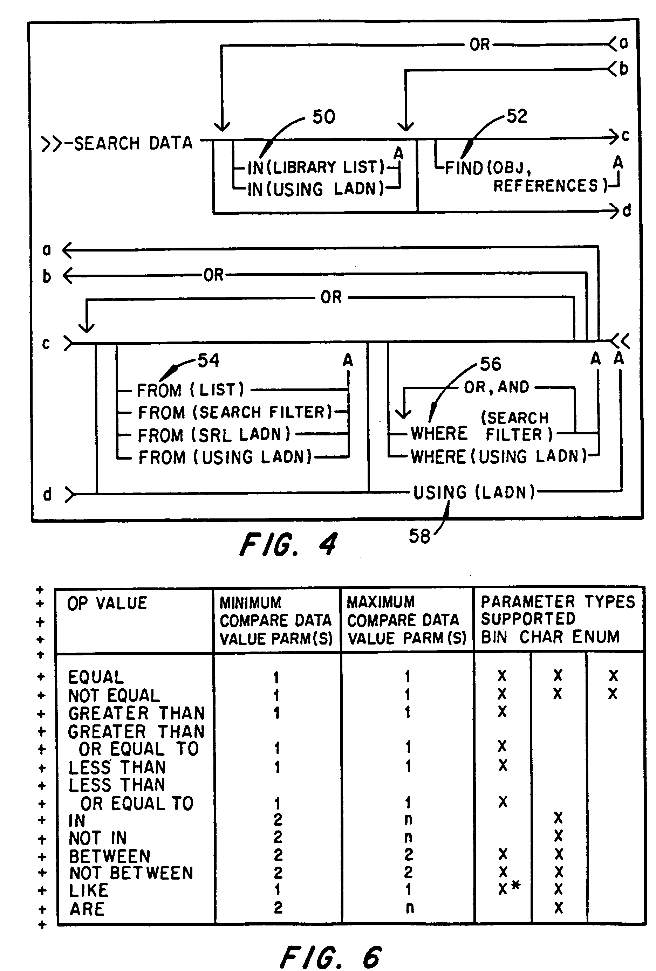

Turning to Figure 4, the scope and filter portions of the SEARCH command are illustrated. A search scope is set by specifying the set of libraries, the documents within the libraries, and the depth within a folder to be examined when documents are contained within the folder.

The IN phrase 50 allows a user to specify the libraries (library scope) to be searched. The SEARCH command uses the IN phrase 50 to identify the libraries which contain the documents that are to be filtered with the search filter. When multiple libraries are specified, the results of the combined search will be stored at the library associated with the library server executing the SEARCH command. The library server is also responsible for the coordination of the SEARCH command with the other libraries specified. It is not a requirement that the library server search its own library when executing the SEARCH command. In the absence of a library scope, the library associated with the library server processing the SEARCH command is the default.

The FIND phrase 52 specifies the depth of the search. A user is allowed to specify whether the objects identified in the FROM phrase are to be searched. More importantly, the FIND phrase specifies the depth to which the objects related to the identified objects are to be searched. This is especially significant when the identified object is a folder document containing a number of related document. In the absence of a search depth, only the documents within the search scope are filtered to the "direct references" or identified objects.

The FROM phrase 54 allows the specification of a folder, a Search Result Document (SRD), or a list of documents to which to apply the filter. When the FROM phrase specifies a list of documents, this list may be specified as a list of Library Assigned Document Names (LADNs) or as a stored list in a Search Result Document's (SRD) search result section. The SEARCH command will only apply the search filter to those documents contained within the scope indicated by the list. In the absence of a document scope, all documents that the user has at least read access to will be included in the search.

The WHERE phrase 56 specifies the document filter which selects a document for inclusion in the search results. The simplest element of the WHERE phrase 56 is a criteria atom. This invention supports both parametric search criteria atoms and contextual search criteria atoms. A parametric search criteria atom is specified as a predicate, object identifier, and one or more parameter identifiers with data. Where the parameter identifier requires a GCID for character set code page identification, this information is also contained within the search information. A parametric search criteria atom may be used as a filter for semantic parameters contained within the various document model objects. For example, returning to Figure 2, a parametric search criteria atom may be used to access semantic parameters in the Document Model Object 30 (DMO), Access Control Model Object 32 (ACMO), Document Relation Object 42 (DRO) or Profile Content Object 44 (PCO). If data is specified with the parameter identifier, it is compared to the data in the selected document model objects using the predicate specified. Therefore, the SEARCH command supports the specification of parameters and parameter fields which have semantic meaning.

Referring again to Figure 4, each of the search criteria scope phrases may be repeated to form a compound scope or filtering phrase. For example, the IN 50, FIND 52, and FROM phrases 54 may be joined with the OR predicate to form a compound scope phrase. Likewise, the WHERE phrase 56 may be joined with either the AND or OR predicates to form a compound filter phrase. Whenever a compound combination is formed using the AND and OR predicates, the AND predicate takes precedence and is executed before the OR predicate.

Turning to Figure 6, the predicates allowed for different data types in a parametric search criteria atom are shown. The parameter types supported include binary (BIN), character (CHAR) and enumerated (ENUM).

Referring again to Figure 4, criteria atoms may be combined to form more complex filters. When complex filters are created using a combination of the AND and OR predicates, the AND predicate is executed before the OR predicate. In addition, the WHERE phrases 56 may be nested within themselves to further specify a filter. In the absence of a search filter, all document contained within the search scope will be selected.

With particular reference to Figure 5, the Backus Nauer Form (BNF) for the WHERE phrase 56 is shown. As indicated, a search filter may consist of a criteria atom along with various combinations of search filters or the WHERE phrase 56.

The contextual search criteria atom is different from the parametric search criteria atom in that it uses an index which is derived from information contained in the document context.

Returning to Figure 4, the SEARCH command supports the use of stored criteria to search for objects in a shared library. This means that the search criteria may be saved for later use. This may be provided through the USING phrase 58 of the illustrated search criteria. A user may specify that the contents of a Search Criteria Document (SCD), which is the document interchange management system's encoding for the search criteria phrase, be stored for later reuse. The Search Criteria Document may be of phrase specific or appended form.

The phrase specific form allows the IN 50, FROM 54, and WHERE 56 phrases to be applied to the search process from a stored document. For the IN phrase 50, the contents of the stored document is the list of libraries to search. The FROM phrase 54 uses the search results list, list of LADNs, or search filter as the stored documents. The WHERE phrase 56 allows the stored document to be the search filter.

The appended form allows the ending phrase or phrases of a search to be supplied to the search process from a stored document. Using the appended form, a user may supply the search with all phrases following the IN phrase 50.

In addition to allowing the search criteria to be stored and reused, the search results may also be stored. The filtering of documents with the search criteria atoms results in a list of document. This list may optionally be stored in a Search Result Document (SRD) for later reference.

The Search Result Document (SRD) has a registered document type of SRD. It contains a document type sub-profile for search specific information. The Search Result Document contents consist of: 1) the search criteria used for the search; 2) the results of the search; and 3) the contextual search probe information. The search criteria portion of the SRD contents is defined as a Search Criteria Document - appended type. The results portion of the SRD contents contains an entry for each document found which meets the specified search criteria. Each entry contains the LADN and optionally the library name as the default. When the library name is not present, the default library from the searched libraries parameter of the Search Result Document (SRD) profile contains the document. The requester may specify other library model object parameters to be stored in the Search Result Document by specifying them in the SEARCH-RESULT-DOCUMENT-CONTENT operand of the SEARCH command. The results of the search may also contain the probe data for the documents found. The probe data is a list of search terms used by the contextual search process to select the documents for inclusion in the Search Result Document (SRD).

When the user specifies a Search Result Document, the DIA library server executing the SEARCH command must create Search Result Document (SRD) sub-profile parameters. Some of the parameters are part of the command input and others result from the execution of the SEARCH command. None of the parameters in the SRD sub-profile are modifiable.

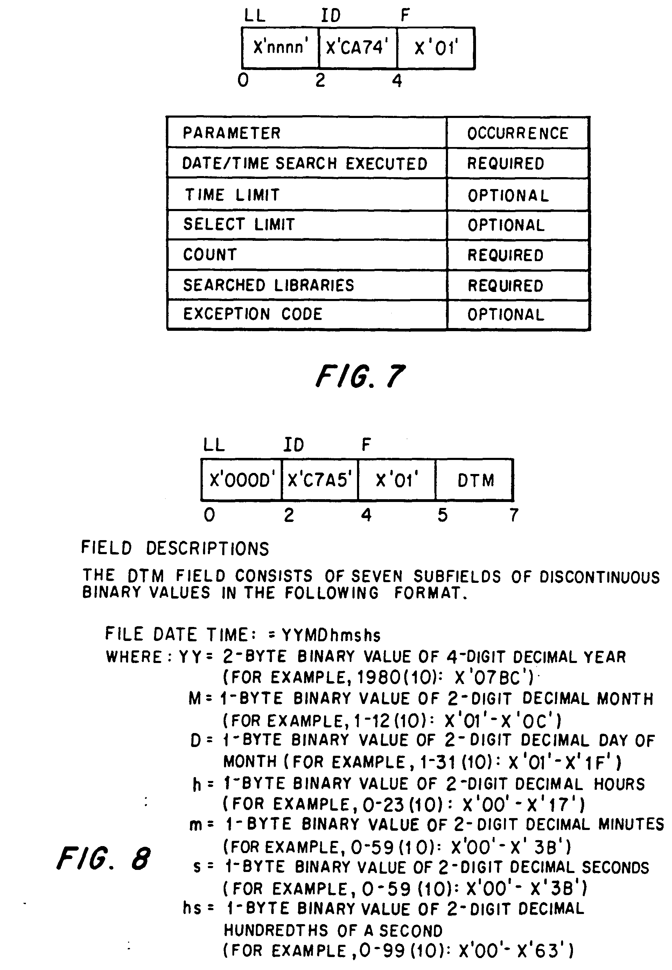

Turning to Figure 7, the structure for the Search Result Document (SRD) sub-profile is shown. The SRD sub-profile uses a syntactic structure consisting of self-defining structured fields. The parameters may consist of single or multiple value fields. The parameters that consist of two or more values contain length and type field delimiters for each of the values. The Search Result Document sub-profile introducer (LLIDF) consists of the length field (LL), the structured field identifier (ID), and the format byte field (F). The length field (LL) is two bytes in length and specifies the total byte length of the application sub-profile introducer and all of the specified parameters. Only the parameters specified in Figure 7 may be used in the sub-profile.

The "Date/Time Search Executed" parameter is required and is set by the search process that creates or updates the Search Result Document (SRD). Figure 8 illustrates the SRD sub-profile with the "Date/Time Search Executed" parameter. The DTM field consists of seven sub-fields of discontinuous binary values in the format indicated in Figure 8.

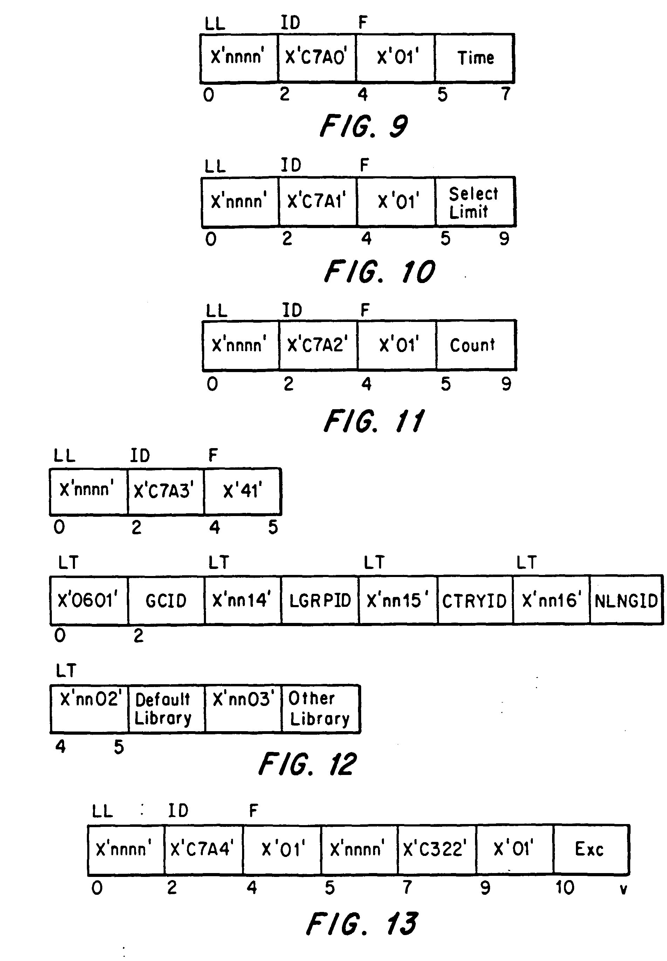

The "Time Limit" parameter is illustrated in Figure 9 and contains the value of the time limit operand on the SEARCH command which resulted in the creation or update of the SRD. This parameter is optional and if absent indicates that no time limit operand was present on the SEARCH command. The time field is a two byte binary number from 1 to 1440 which specifies the maximum number of minutes that the SEARCH process should be permitted to execute.

Turning to Figure 10, the "Select Limit" parameter structure is shown which contains the value of the select limit operand specified on the SEARCH command. The 4-byte binary number specifies the maximum number of documents the search process may select and cannot be zero.

Referring to Figure 11, the "Count" parameter structure is shown which contains the number of documents qualified by the SEARCH command which resulted in the creation or update of the Search Result Document (SRD). This required parameter always reflects the contents of the SRD.

The "Searched Libraries" parameter is shown in Figure 12. It contains a list of libraries which were searched using the search criteria. One and only one library must be assigned by the search process as the default library in the libraries searched parameter. If the search criteria contains no IN phrase group, the value of the default library in this parameter is set to the name of the library where the SEARCH command was executed. The "Searched Library" parameter contains one or more fields. The optional GCID field specifies the code page ID for all subsequent LIBRARY NAMEs. The Language Group Identification (LGRPID) field is 2-bytes and identifies the National Language Group to which the language being identified belongs. The Country Identification (CTRYID) field is 2-bytes and contains the code assigned to the country with which the national language information is being related. The National Language Identification (NLNGID) is optional and contains a code assigned to the National Language being identified. The field is 2-bytes and the code reflects any dialect of a particular language. The Default Library field is 1 to 44 bytes and contains the name of the default library. It is a required field and can appear only once. The Other Library field is 1 to 44 bytes and contains the name of the libraries other than the Default Library. It is an optional field and can appear more than once.

Figure 13 illustrates the structure for the "Exception Code" parameter. Its existence indicates the SEARCH command was executed successfully, but that certain conditions were detected that may have caused incomplete results.

Execution of the SEARCH command without specification of a Search Result document results in the return of a Document Descriptor Document (DDD) upon successful completion of a search. The DDD is returned to the requester in the Document Unit of the DELIVER command. In order to be executed on a document interchange system, the Document Descriptor Document (DDD), Search Result Document (SRD) and Search Criteria Document (SCD) must conform to DIA encoding as formally described in encoding tables.

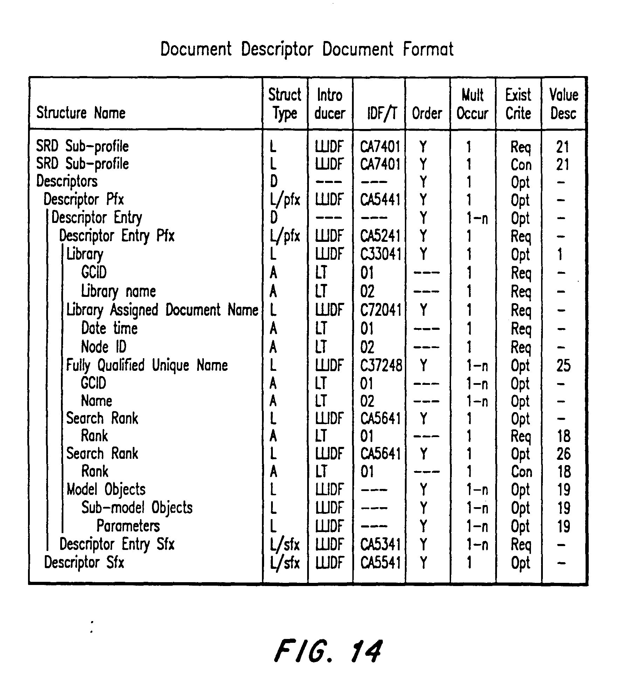

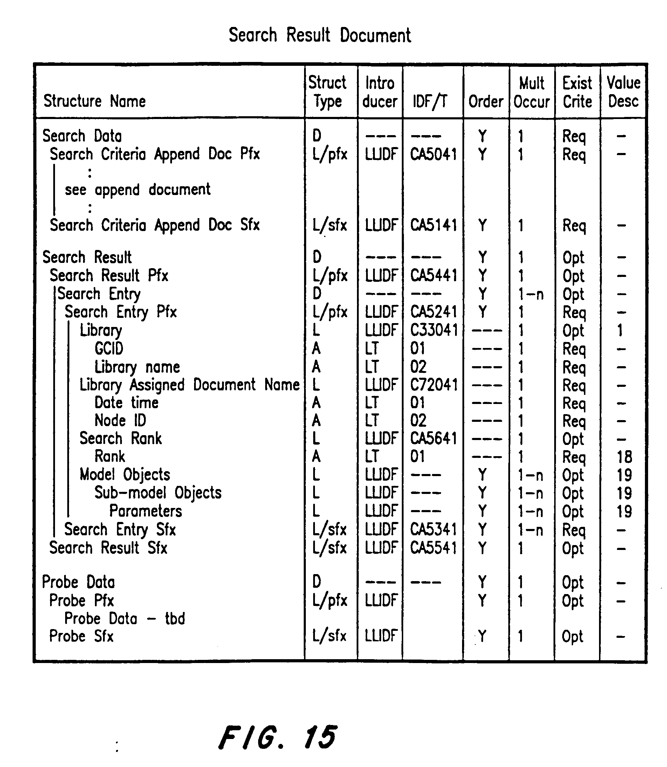

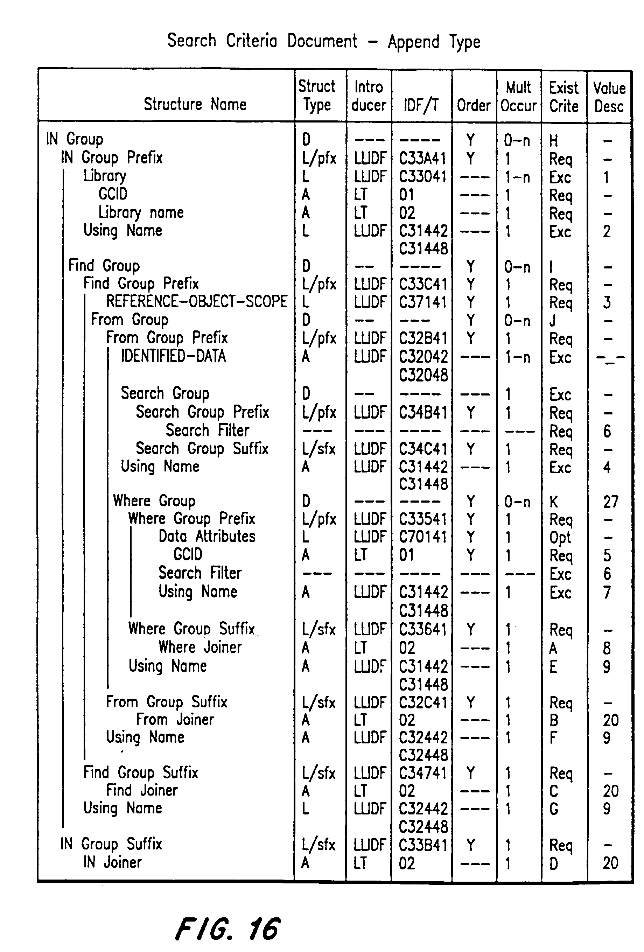

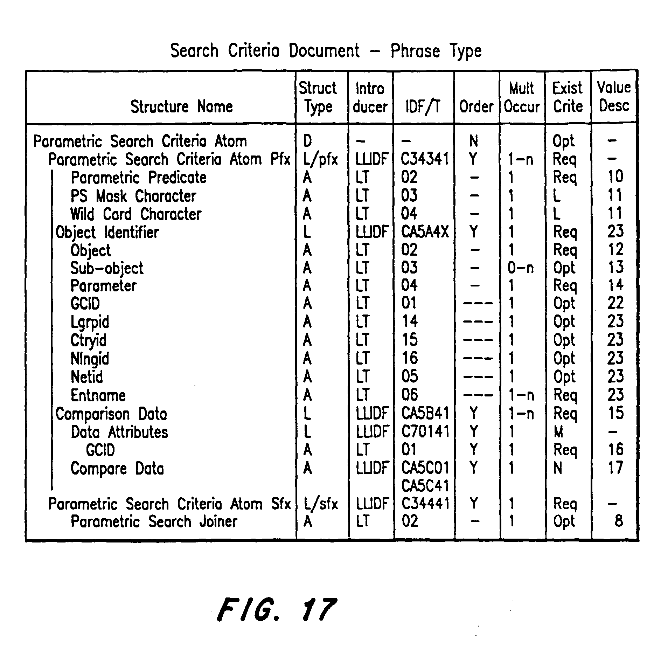

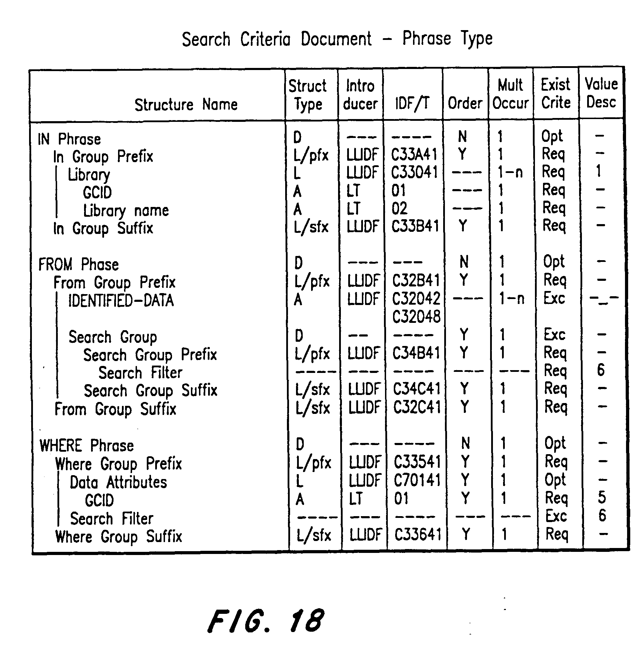

The required DIA encoding tables contain the formatting information required to either parse or build DIA search data streams. The structure for building the Document Descriptor Document (DDD), Search Result Document (SRD) and Search Criteria Document (SCD) is shown in Figures 14-18, respectively. Figures 16 and 17 shows the structure for the Search Criteria Document -- Appended form and Figure 18 shows the structure of the Search Criteria Document phrase form.

With particular reference to Figures 14-18, the first column of the DIA encoding tables must identify the DIA structures by name and illustrate hierarchical relationship between these structures by indentation of the column entries. The order of the structure entries in the table represent, unless otherwise specified, the order in which the structure appears in a DIA data stream. The remaining columns describe the encoding characteristics, atomic values, and existence criteria for each of the named structures.

The structure type may be atomic (A), length-bounded parent (L), or delimited parent (D). An atomic structure contains its own introducer followed by data. Every DIA structure is bounded by its own length and identification bytes that are collectively known as the "introducer". An introducer may be either two bytes in length, referred to as an LT (Length and Type), or five bytes in length, referred to as an LLIDF (Length and Identifier). The length-bounded (L) structure means that a structure is bounded by an encompassing structure. A hierarchical relationship exist in which the length of the encompassing structure, referred to as a "parent structure", includes the lengths of all encompassing structures, referred to as "child" structures. The delimited parent (D) structures are used to define logical groups of structures by defining the corresponding parent structures. The logical group is defined at a single encoding level by designating the first and final children of the logical group as delimiters. The first child which acts as the start delimiter is indicated by "L/pfx" in the structure type column of the encoding table. The last child which acts as the end delimiter is indicated by "L/sfx" in the encoding table. The length of these delimiters encompass only themselves.

The introducer as previously described may be either "LLIDF" or "LT". The IDF/T column contains the IDF or T value in hexadecimal.

The order column serves to indicate if a parent structure have either ordered or unordered children. Ordered children must occur in the data stream in the same order as they are described in the encoding table. Unordered children are allowed to occur in the data stream in any order. A value of "Y" in this column indicates that children are ordered. A value of "N" indicates that children are unordered. A value of "--" indicates that no children are present.

The multiple occurrences column indicates that multiple occurrences of DIA structures may or may not be permitted. A value of "1-n" indicates that there is no architected limit. A value of "1" indicates that only a single instance of the corresponding structure is appropriate.

The existence criteria column serves to convey whether an incoming data stream has the appropriate combination of IDFs and Ts. A DIA implementation must know the conditions under which each IDF/T is either required or precluded. These conditions may have one of the following values:
REQUIRED -- Omission considered DIA syntax violation
OPTIONAL -- Presence is strictly optional
CONDITIONAL -- Presence is conditional
EXCLUSIVE -- Only one of the structures are required
ALPHABETIC -- The corresponding structure is given in the Existence Criteria Table (See Tables 1 and 2)

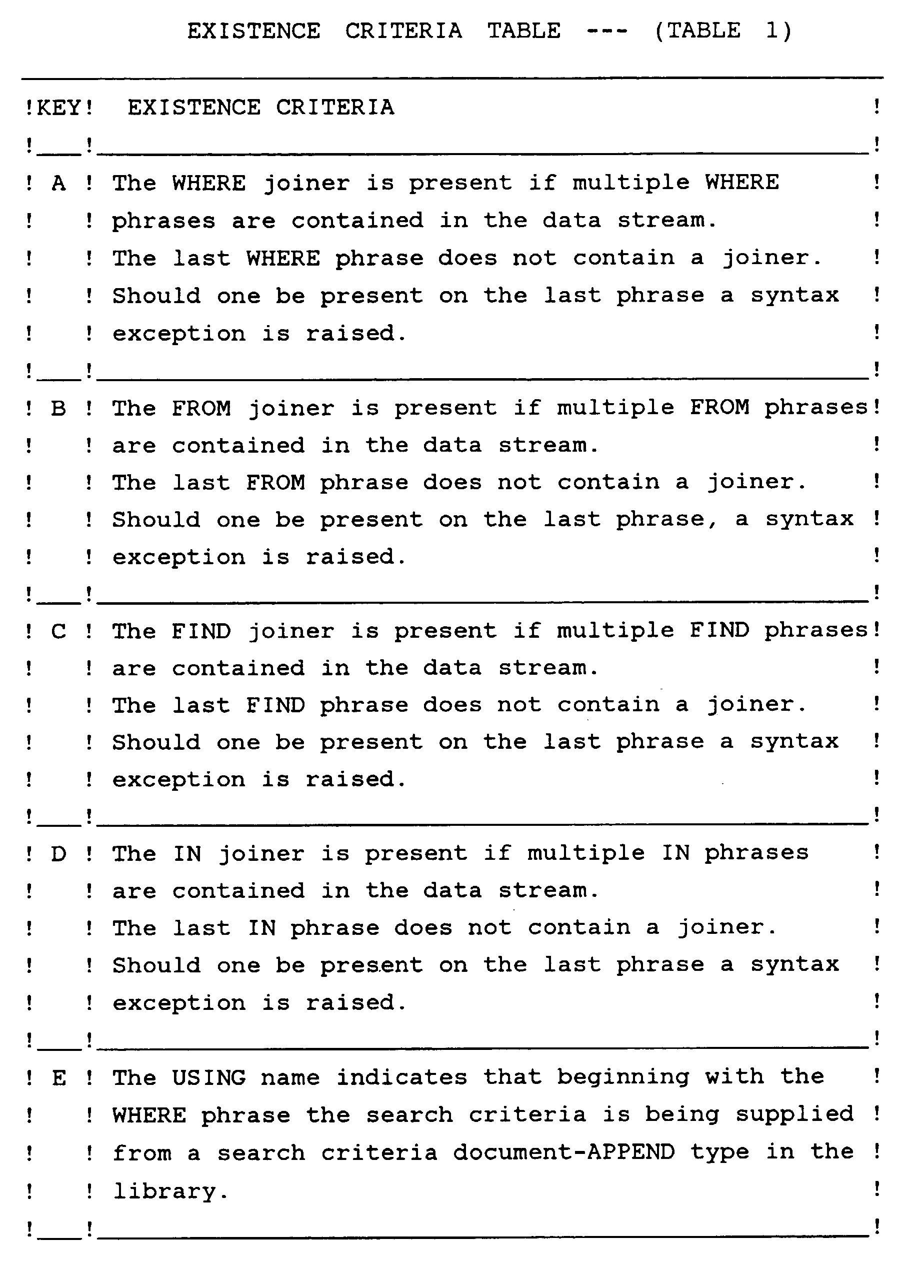

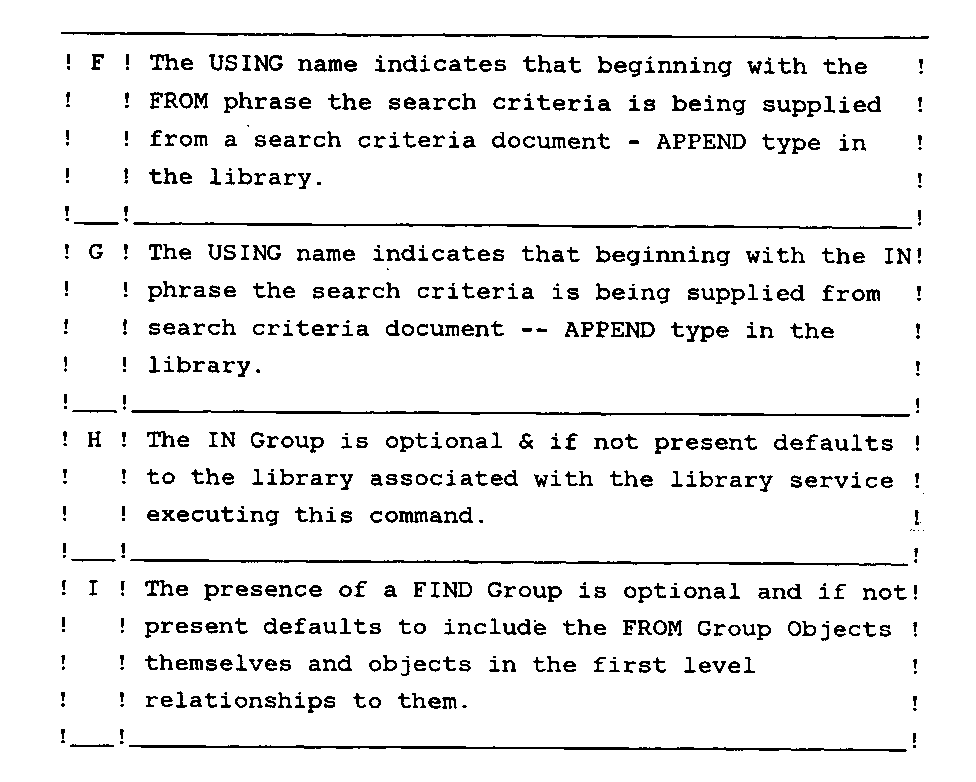

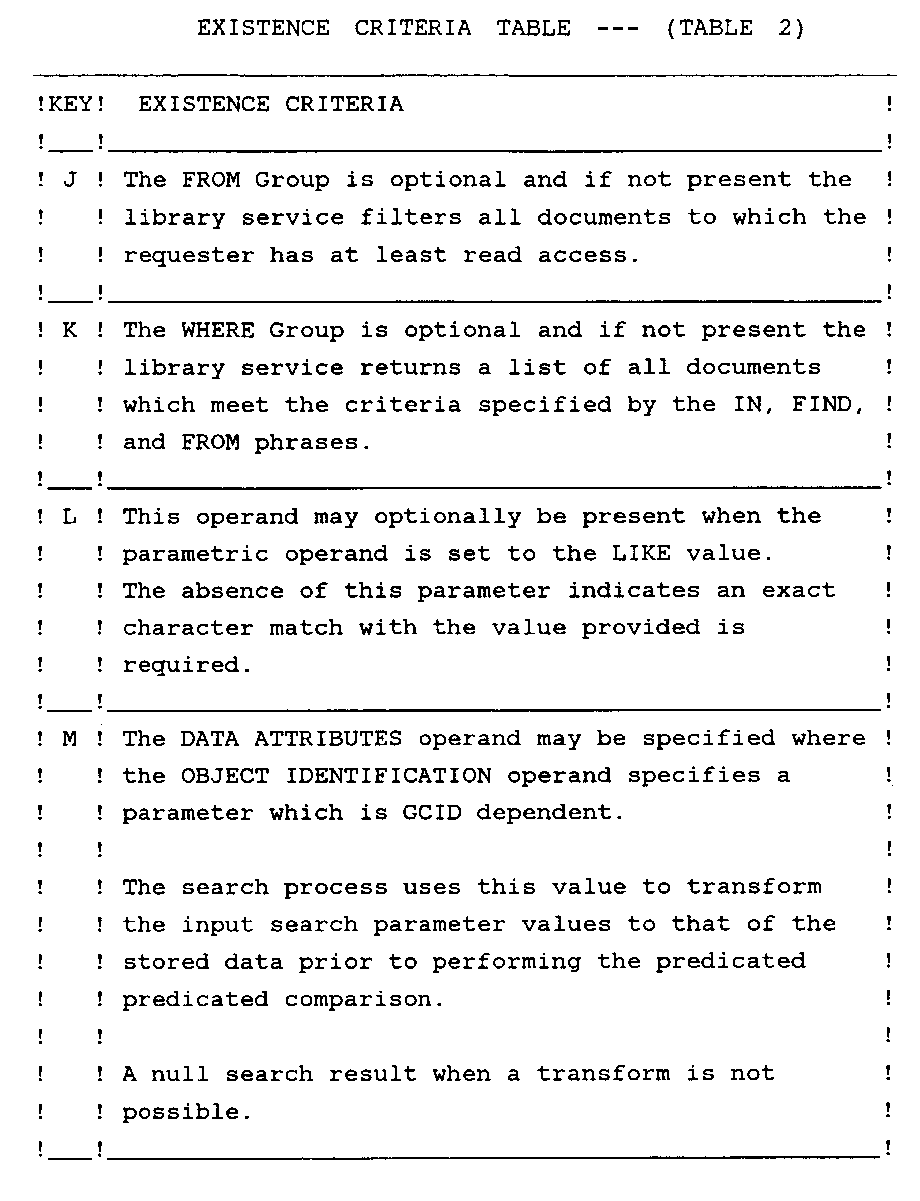

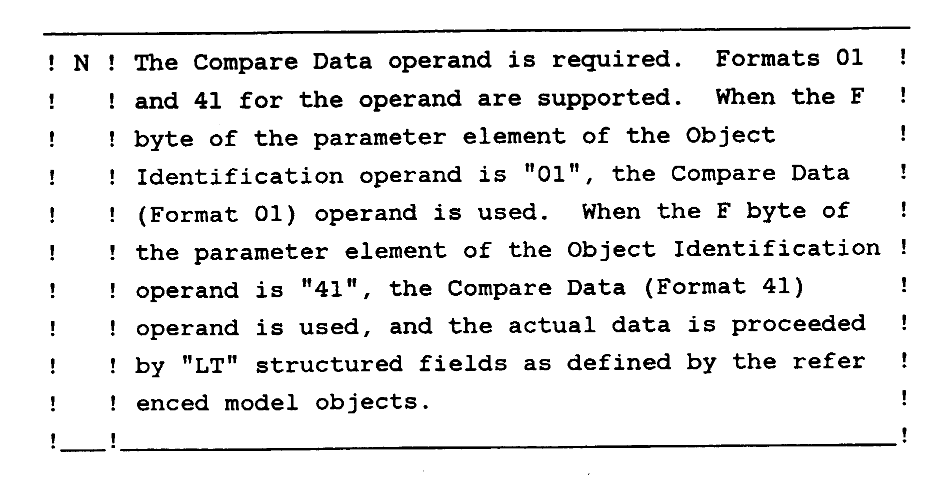

The value description column indicates that the data value in this atomic structure has a particular semantic. The semantics for each of the data values are given in the following Value Description Tables (See Tables 3-8).

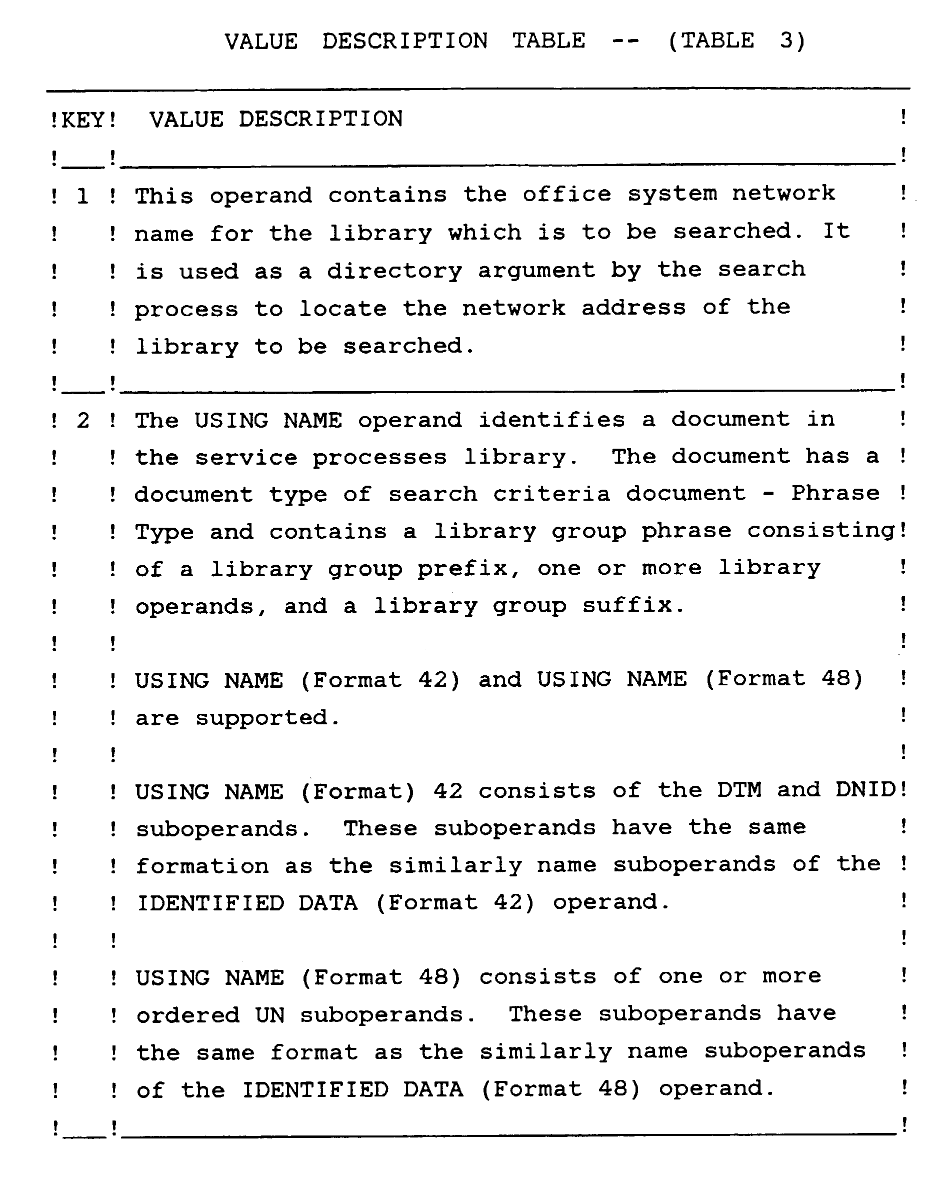

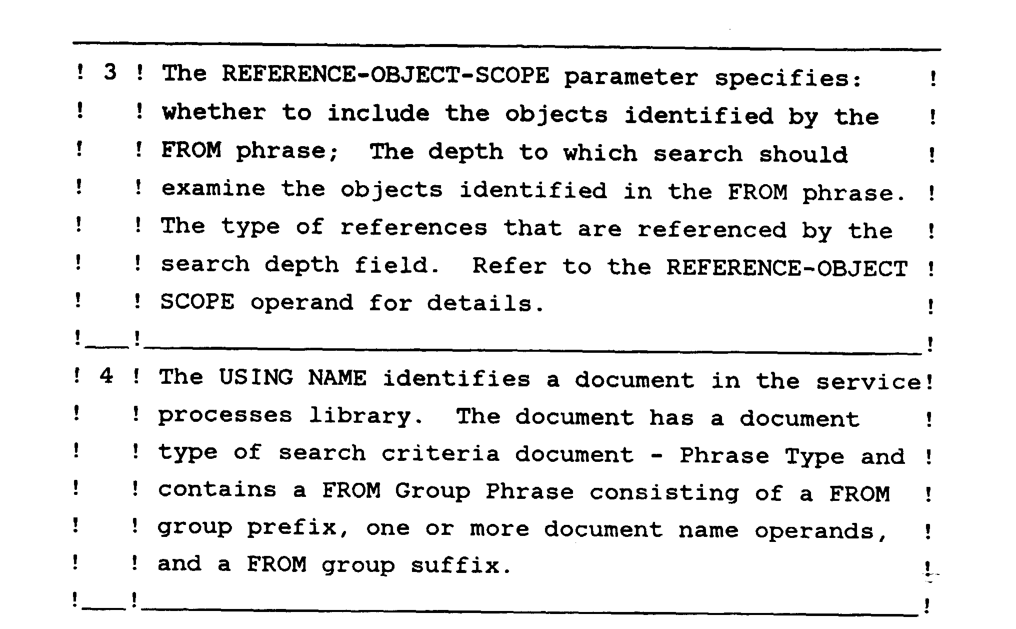

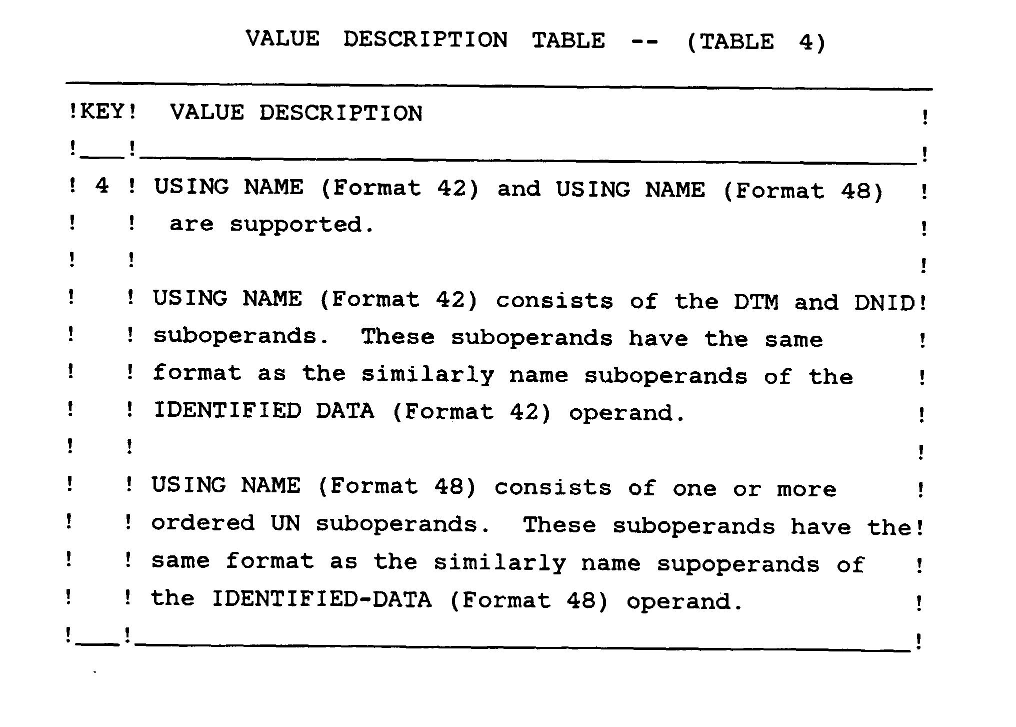

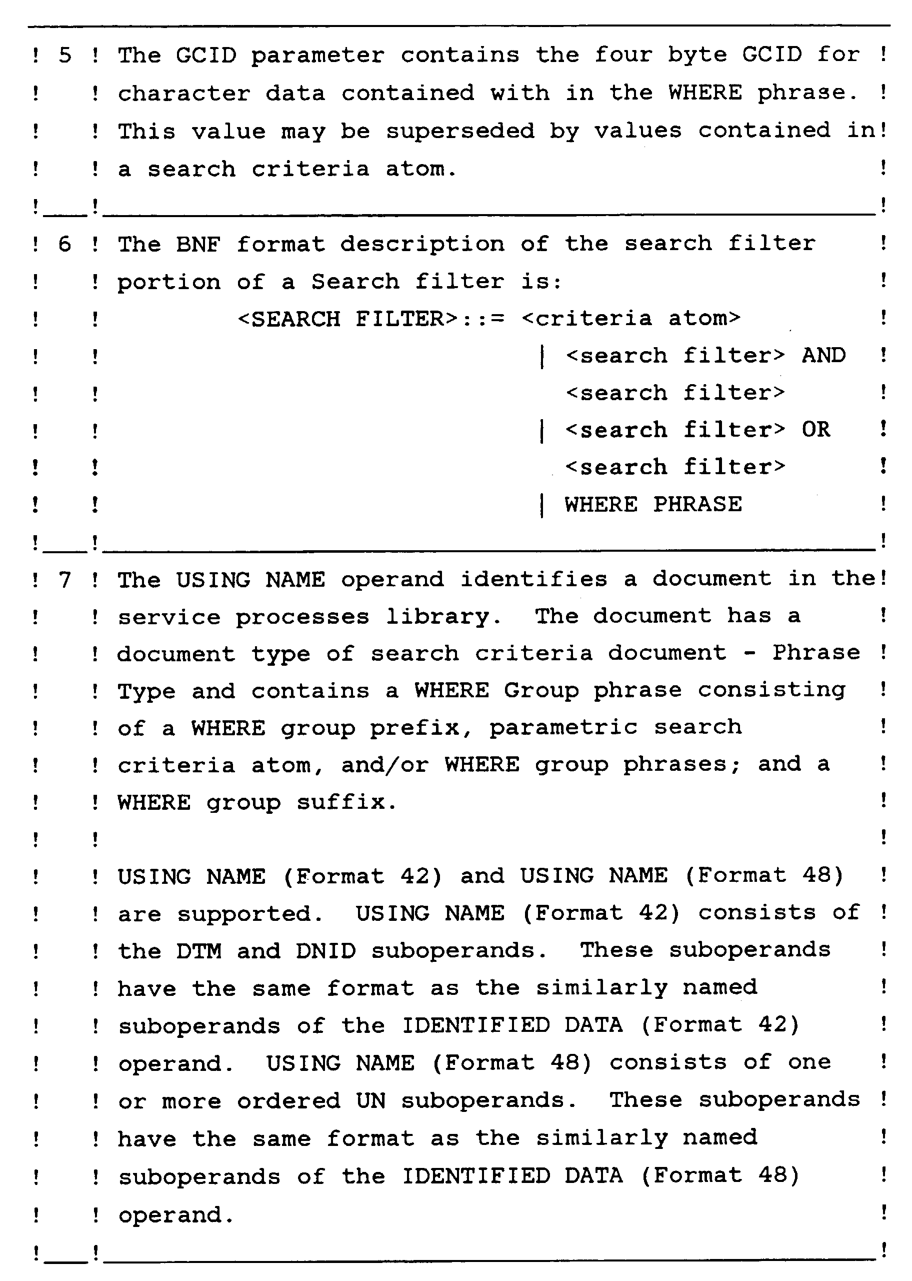

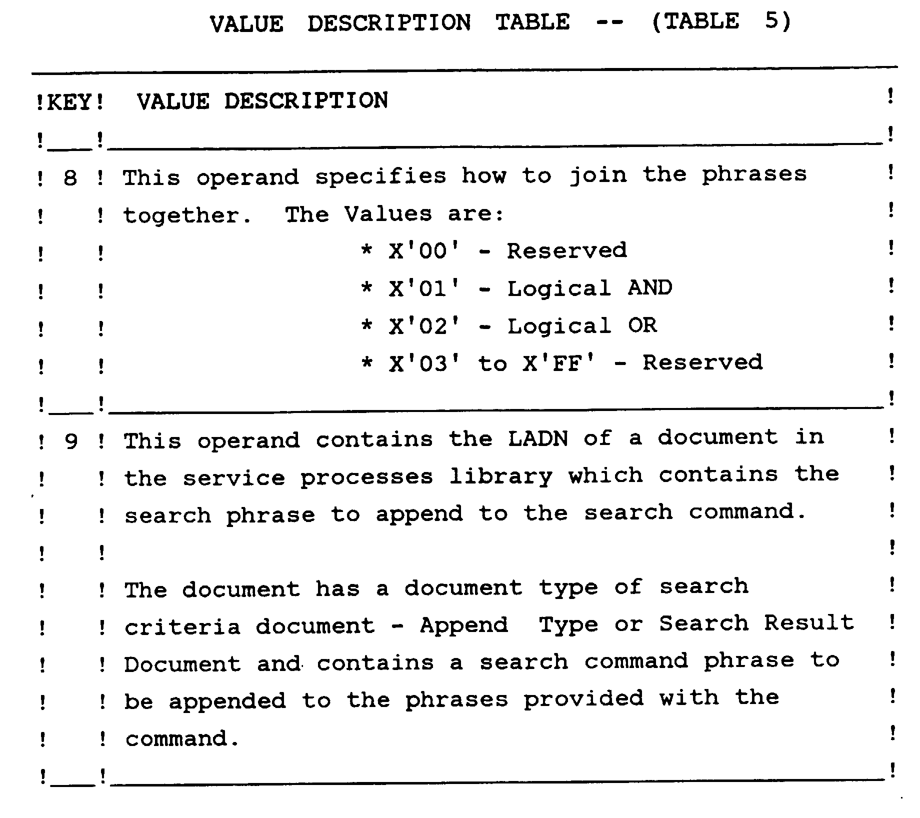

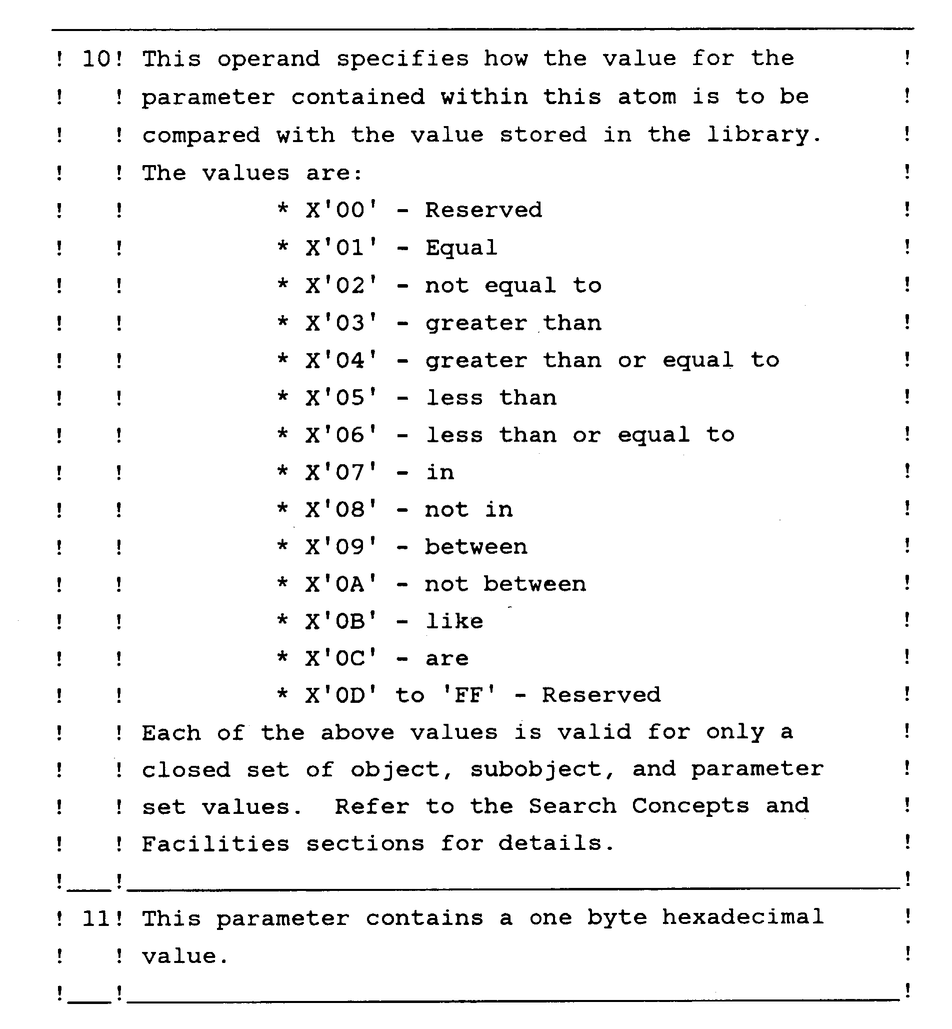

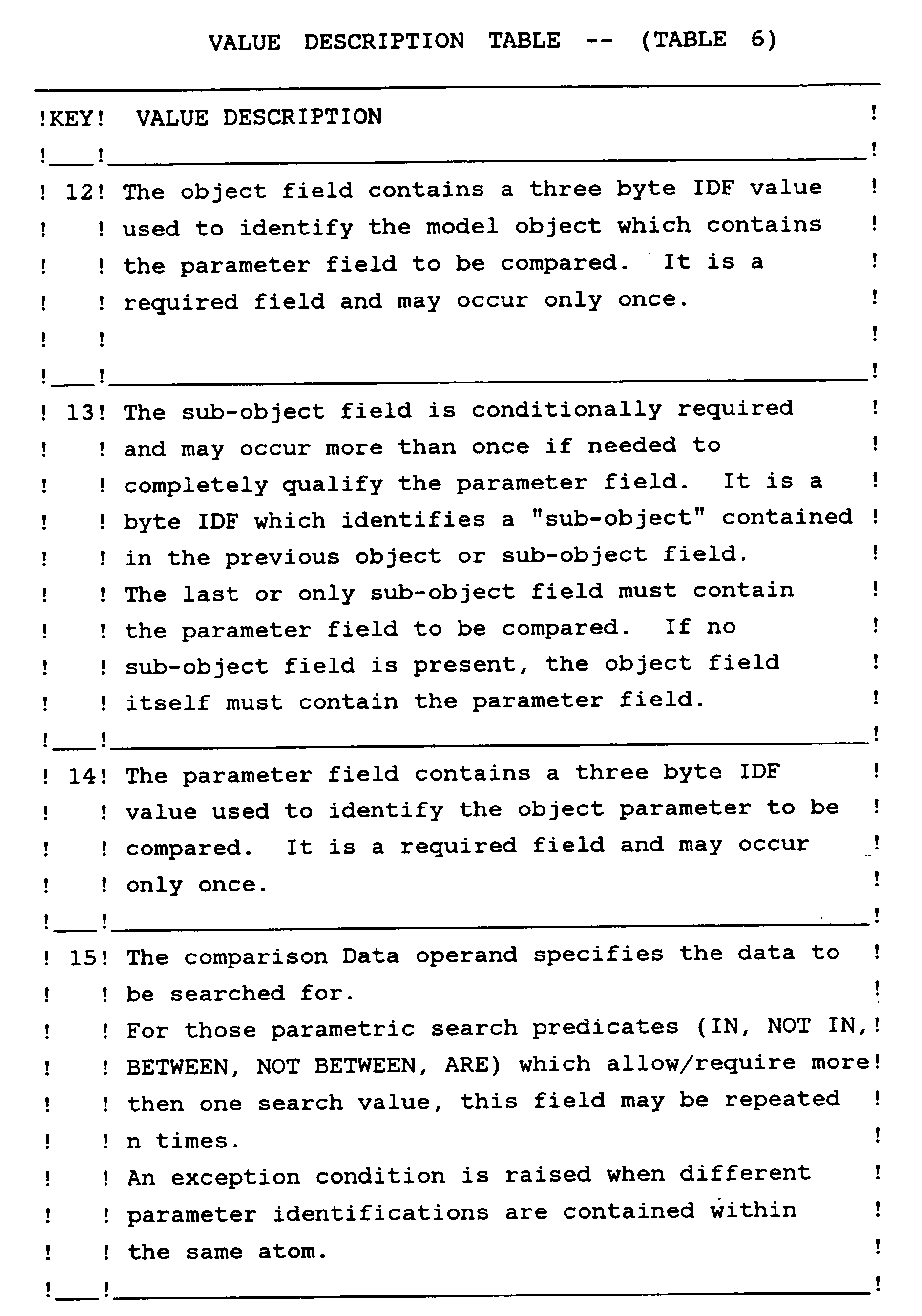

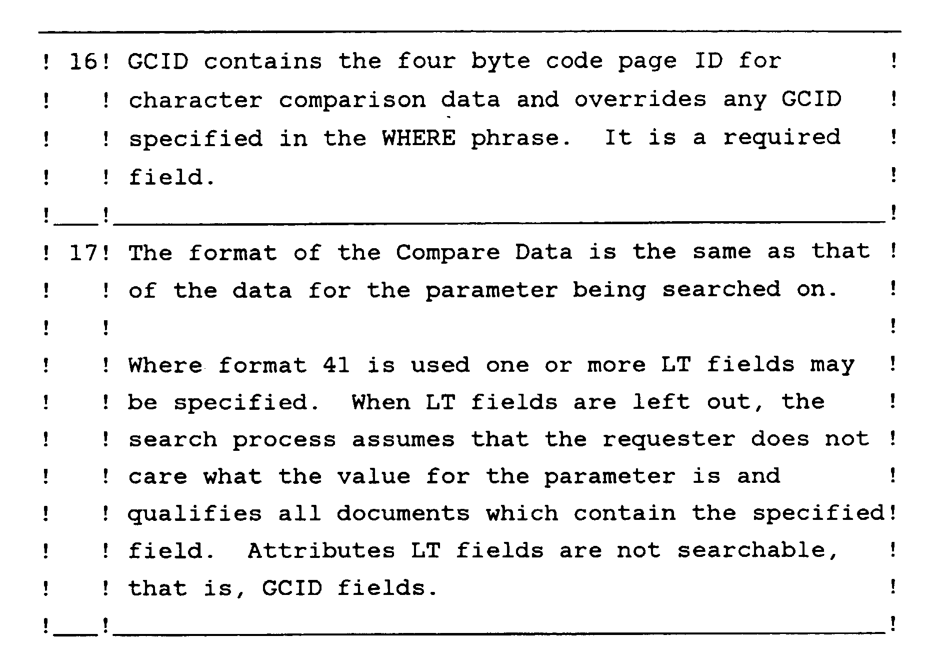

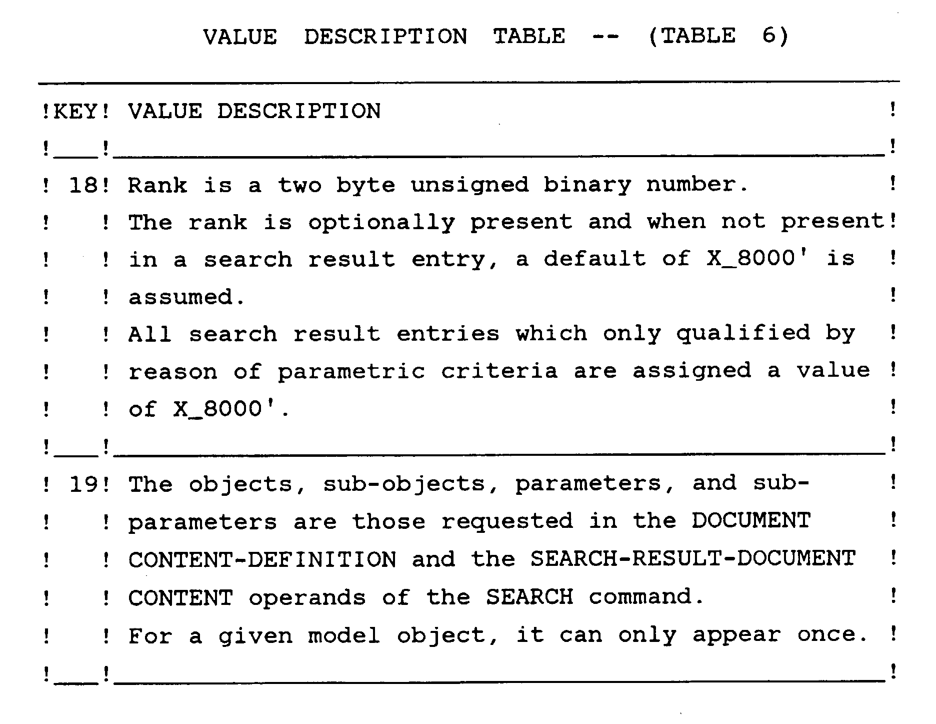

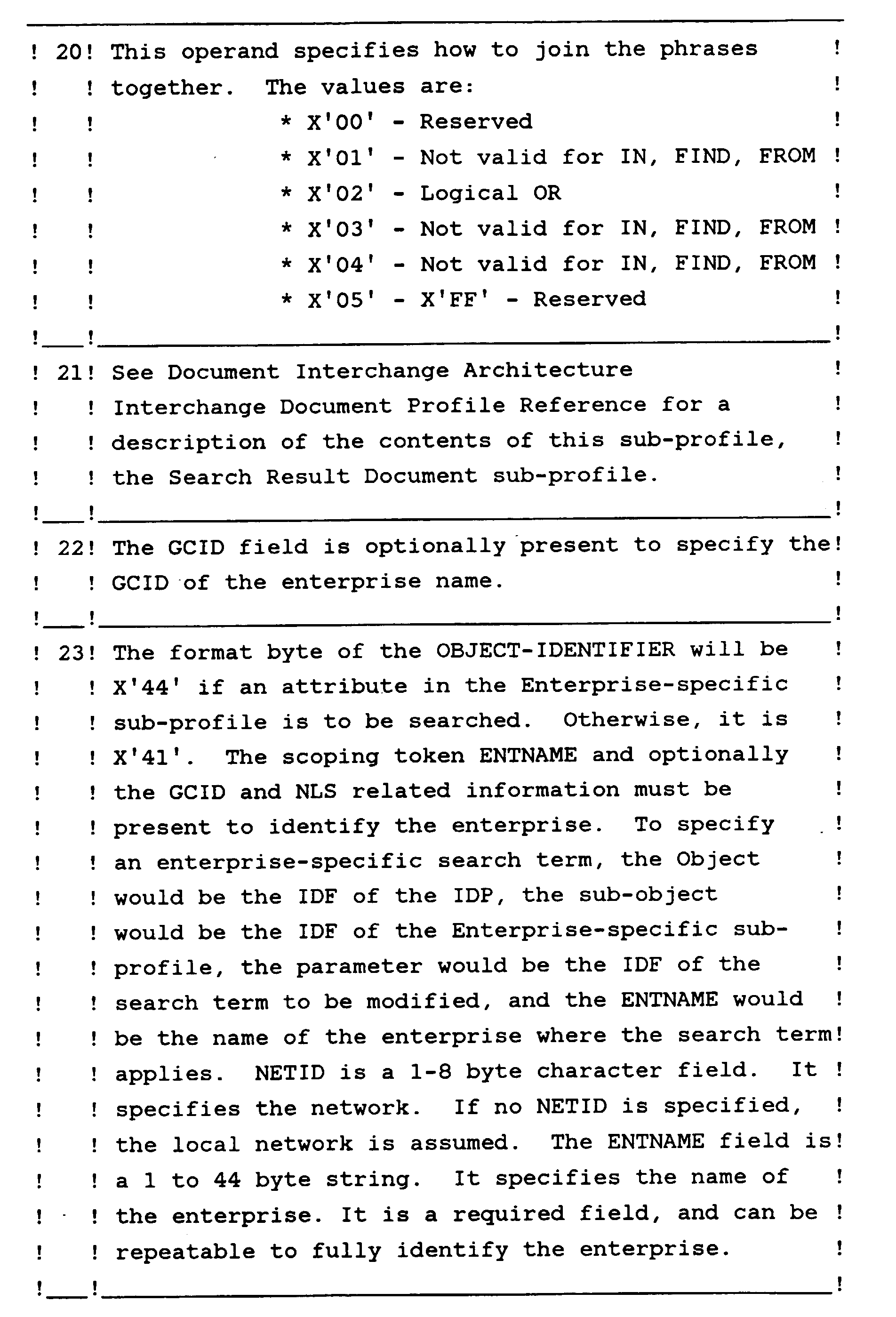

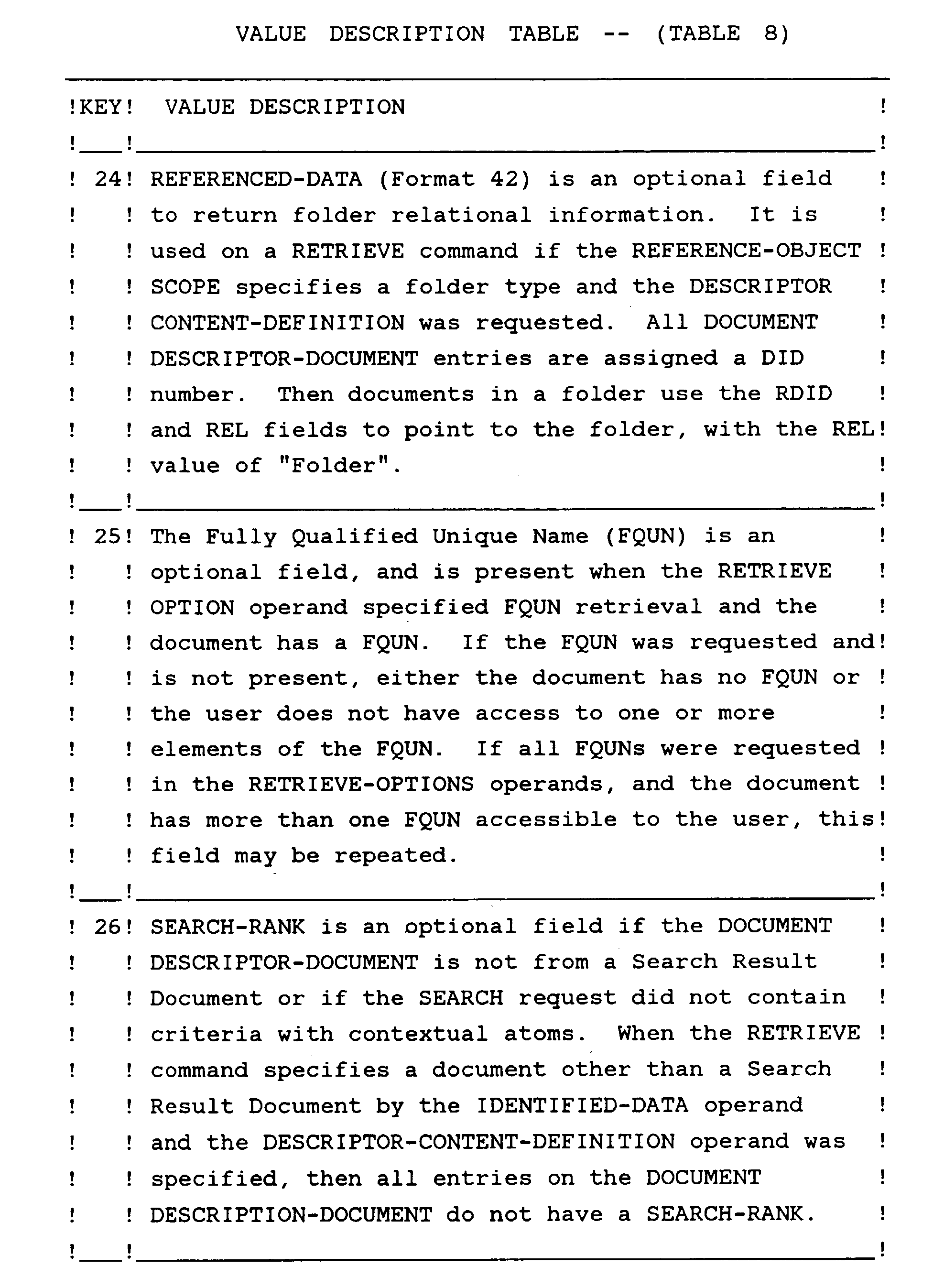

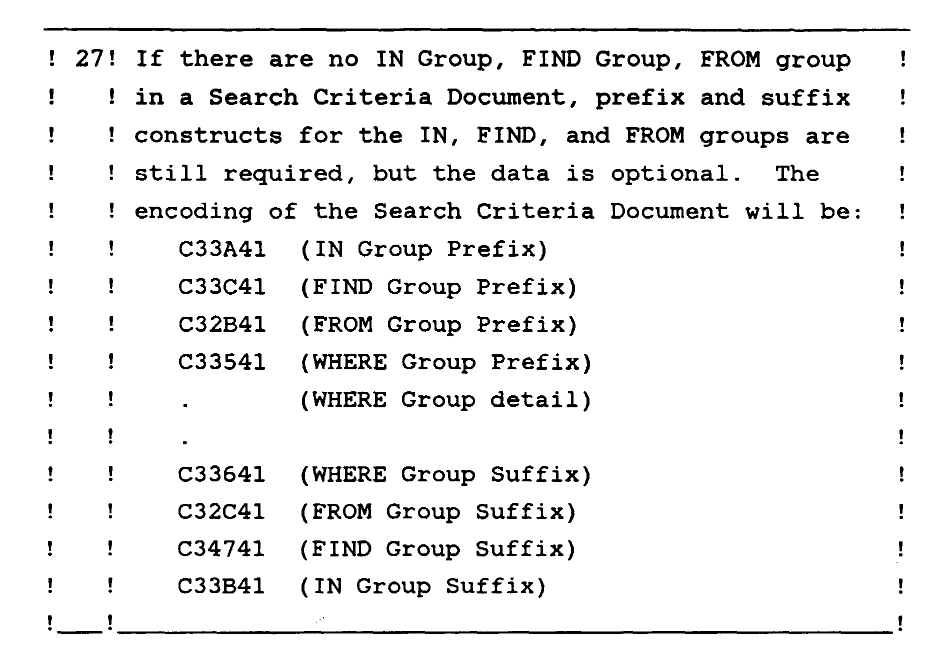

In summary, this invention provides a method of saving the search criteria as well as the search results in a document interchange management system. The search criteria is saved in a Search Criteria Document. This Search Criteria Document may take phrase or appended forms. The phrase form allows a user to store the scope portion of the search criteria for later reuse. The appended form allows a user to create a stored criteria from all potions of the search criteria following the IN phrase. The search results may be saved in a Search Result Document. This Search Result Document may be stored in documents that have a relationship with other documents such as folders. This invention provides the structures for encoding each of the storage documents. A user is therefore provided with a flexible means for searching a plurality of shared libraries in a document management system and saving both the search criteria and search results.

## Claims

1. A method of forming a search criteria for locating a library object that may be stored in one of a plurality of shared libraries, said method being of the type of :
specifying a depth of search for one library object in said search criteria;
said method being characterized in that it comprises the steps of :
specifying at least one of said plurality of libraries where said library object might be stored in said search criteria; and wherein said 'specifying a depth of search' step applies to said at least one of said plurality of libraries ;
encoding and storing said search criteria in a search criteria document for searching in at least one of said plurality of libraries; and
saving said search criteria document.

2. The method according to claim 1 further characterized in that it includes the step of specifying said library object as a subject for said depth of search in at least one of said plurality of libraries.

3. The method according to claim 1 further characterized in that it includes the step of appending said search criteria with a stored new search criteria document.

4. A method of saving a search result in a document interchange management system, said search result created by executing a search criteria in one of a plurality of shared libraries in said document interchange management system, said method comprising the step of :
creating a search result document in said document management system;
said method being characterized in that it comprises the steps of :
encoding said search result document in a structure acceptable to said document management system; and
storing said search result in said search result document for viewing and updating.

## Revendications

1. Une méthode pour produire un critère de recherche pour localiser un objet de bibliothèque pouvant être stocké dans l'une parmi une pluralité de bibliothèques partagée, ladite méthode étant du type consistant à :
spécifier une profondeur de recherche pour un objet de bibliothèque dans ledit critère de recherche;
ladite méthode étant caractérisée en ce qu'elle comprend les étapes consistant à :
spécifier au moins l'une parmi ladite pluralité de bibliothèques dans laquelle ledit objet de bibliothèque peut être stocké dans ledit critère de recherche; et dans lequel ladite étape de 'spécification d'une profondeur de recherche' s'applique à ladite au moins une parmi ladite pluralité de bibliothèques;
coder et stocker le dit critère de recherche dans un document de critères de recherche, pour rechercher dans au moins l'une parmi ladite pluralité de bibliothèques; et
sauvegarder ledit critère de recherche

2. La méthode selon la revendication 1, caractérisé en outre en ce qu'elle comprend l'étape de spécification dudit objet de bibliothèque à titre de sujet pour ladite profondeur de recherche dans au moine une parmi ladite pluralité de bibliothèques.

3. La méthode selon la revendication 1, caractérisée en outre en ce qu'elle comprend l'étape d'annexer ledit critère de recherche à un document de critères de recherche nouvellement stocké.

4. Une méthode de sauvegarde d'un résultat de recherche dans un système de gestion d'échange de documents, ledit résultat de recherche créé par l'exécution d'undit critère de recherche dans l'une parmi une pluralité de bibliothèques partagées dans ledit système de gestion d'échange de documents, ladite méthode comprenant les étapes consistant à :
créer un document de résultat de recherche dans ledit système de gestion de documents;
ladite méthode étant caractérisée en ce qu'elle comprend l'étape consistant à :
coder ledit document de résultat de recherche dans une structure qui soit acceptable audit système de gestion de documents; et
stocker ledit résultat de recherche dans ledit document de résultat de recherche afin d'effectuer une visualisation et une mise à jour.

## Patentansprüche

1. Verfahren zur Bildung von Suchkriterien für die Lokalisierung eines Bibliotheksobjektes, das in einer aus einer Vielzahl von gemeinsam benutzten Bibliotheken gespeichert sein kann, wobei das Verfahren von der Art ist,
daß eine Suchtiefe für ein Bibliotheksobjekt in den Suchkriterien angegeben wird,
wobei das Verfahren dadurch gekennzeichnet ist, daß es folgende Schritte umfaßt:
Angabe wenigstens einer aus der Vielzahl von Bibliotheken, in denen das Bibliotheksobjekt in den Suchkriterien gespeichert werden könnte und in denen der Schritt 'Angabe einer Suchtiefe' auf wenigstens eine aus der Vielzahl von Bibliotheken angewendet werden kann;
Codierung und Speicherung der Suchkriterien in einem Suchkriteriendokument zur Suche in wenigstens einer aus der Vielzahl von Bibliotheken, und
Sichern des Suchkriteriendokumentes.

2. Verfahren gemäß Anspruch 1, weiterhin dadurch gekennzeichnet, daß es den Schritt der Angabe des Bibliotheksobjektes als Gegenstand für die Suchtiefe in wenigstens einer aus der Vielzahl von Bibliotheken enthält.

3. Verfahren gemäß Anspruch 1, weiterhin dadurch gekennzeichnet, daß es den Schritt des Anhängens der Suchkriterien an ein gespeichertes neues Suchkriteriendokument enthält.

4. Verfahren zur Sicherung eines Suchergebnisses in einem Dokumentenaustausch-Managementsystem, wobei das Suchergebnis durch die Abarbeitung eines Suchkriteriums in einer aus der Vielzahl von gemeinsam benutzten Bibliotheken in dem Dokumentenaustausch-Managementsystem erzeugt wurde, wobei das Verfahren den Schritt
Erzeugen eines Suchergebnisdokumentes in dem Dokumentenmanagementsystem
umfaßt und das Verfahren dadurch gekennzeichnet ist, daß es folgende Schritte umfaßt:
Codierung des Suchergebnisdokumentes in einer Struktur, die vom Dokumentenmanagementsystem akzeptiert werden kann, und
Speicherung des Suchergebnisses in dem Suchergebnisdokument zwecks Ansicht und Aktualisierung.
